# EUROPÄISCHE PATENTSCHRIFT

(11) **EP 1 297 637 B1**
(45) Veröffentlichungstag und Bekanntmachung des Hinweises auf die Patenterteilung: **13.04.2005**
(21) Anmeldenummer: 01956272.7
(22) Anmeldetag: 13.06.2001
(51) Int. Cl.: H04B 7/005, H04Q 7/22

(54) **VERFAHREN ZUR LEISTUNGSREGELUNG UND KANALZUWEISUNG IN ABWÄRTS- UND/ODER AUFWÄRTSVERBINDUNGEN BEI PAKET-DATEN-DIENSTEN IN EINEM FUNK-KOMMUNIKATIONSSYSTEM UND FUNK-KOMMUNIKATIONSSYSTEM ZUM DURCHFÜHREN DES VERFAHRENS**
METHOD FOR REGULATING POWER AND FOR CHANNEL ALLOCATION IN DOWNLINK AND/OR UPLINK CONNECTIONS OF PACKET DATA SERVICES IN A RADIO COMMUNICATIONS SYSTEM, AND RADIO COMMUNICATIONS SYSTEM FOR CARRYING OUT SAID METHOD
PROCEDE DE REGULATION DE PUISSANCE ET D'ATTRIBUTION DE VOIES DANS DES CONNEXIONS AVAL ET/OU AMONT POUR DES SERVICES DE DONNEES EN PAQUETS DANS UN SYSTEME DE COMMUNICATION RADIO, ET SYSTEME DE COMMUNICATION RADIO POUR LA MISE EN OEUVRE DE CE PROCEDE

(30) Priorität: 15.06.2000 DE 10029427
(43) Veröffentlichungstag der Anmeldung: 02.04.2003
(73) Patentinhaber: SIEMENS AKTIENGESELLSCHAFT, 80333 München (DE)
(72) Erfinder: BALL, Carsten, 81373 München (DE); IVANOV, Kolio, 81369 München (DE)
(86) Internationale Anmeldenummer: PCT/DE2001/002213
(87) Internationale Veröffentlichungsnummer: WO 2001/097402

(56) Entgegenhaltungen:
- EP-A- 0 977 370
- WO-A-00/13443
- WO-A-99/57925

## Beschreibung

Die Erfindung betrifft ein Verfahren mit den oberbegrifflichen Merkmalen des Patentanspruchs 1, insbesondere ein Verfahren zur Leistungsregelung von Abwärts- und/oder Aufwärtsverbindungen bei Paket-Daten-Diensten in einem Funk-Kommunikationssystem, bzw. ein Funk-Kommunikationssystem mit den oberbegrifflichen Merkmalen des Patentanspruchs 12 zum Durchführen des Verfahrens.

In Funk-Kommunikationssystemen werden Informationen, beispielsweise Sprache, Bildinformationen oder andere Daten, mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

In bestehende Mobilfunknetze nach dem GSM-Standard (GSM: Global System for Mobile Communications) mit Frequenzen zwischen 400 MHz und 2,0 GHz werden derzeit neuartige Datendienste wie der Paketdatendienst GPRS (General Packet Radio Service) sowie dessen Erweiterung EDGE/EGPRS (Enhanced Data Rates for GSM Evolution / Enhanced GPRS) eingeführt. Die Übertragung im Mobilfunknetz findet hierbei nicht verbindungsorientiert bzw. nicht leitungsvermittelt, sondern in Form von Paketdaten statt. Diese Art der Übertragung nutzt die gegebenen Übertragungsressourcen im Mobilfunknetz beispielsweise durch Multiplexing besser aus.

Beim TDMA-Verfahren, wie z.B. GSM oder auch TDD UMTS, ist für eine TDMA-Komponente (TDMA: Time Division Multiple Access) eine Aufteilung eines breitbandigen Trägers mit z.B. einem Frequenzbereich von 5 MHz bei UMTS oder eines schmalbandigen Trägers mit z.B. 200 kHz bei GSM in mehrere Zeitschlitze gleicher Zeitdauer vorgesehen. Bei TDD-UMTS (TDD: Time Division Duplex) wird auf der gleichen Trägerfrequenz ein Teil der Zeitschlitze in Abwärtsrichtung DL (Downlink) von der Basisstation zur Teilnehmerstation und ein Teil der Zeitschlitze in Aufwärtsrichtung UL (Uplink) von der Teilnehmerstation zur Basisstation benutzt. Beim GSM-Standard sind für die Aufwärtsverbindung bzw. Aufwärtsrichtung und die Abwärtsverbindung bzw. Abwärtsrichtung jeweils acht Zeitschlitze auf zwei durch einen Duplexabstand getrennten 200 kHz Trägerfrequenzen vorgesehen. Zur Datenübertragung bei den Paketdatendiensten GPRS/EGPRS nach dem GSM-Standard wird jedem Zeitschlitz ein Paket-Daten-Verkehrskanal PDTCH (Packet Data Traffic Channel) zugeordnet. Alle Paket-Daten-Verkehrskanäle sind unidirektional. Eine Übertragung findet entweder in Aufwärtsverbindung für die Paketdatenübertragung von der Teilnehmerstation zur Basisstation oder in Abwärtsverbindung für die Paketdatenübertragung von der Basisstation zur Teilnehmerstation statt. Dabei kann ein Paketdaten-Verkehrskanal einem Teilnehmer bei einer statischen Kanalvergabe (fixed allocation nach GSM 04.60) fest für ein bestimmtes Zeitintervall oder bei einer dynamischen Kanalvergabe (dynamic allocation nach GSM 04.60) mehreren Teilnehmern gleichzeitig zugewiesen werden, d.h. mehrere Teilnehmer werden auf diesem Paketdaten-Verkehrskanal versorgt (Multiplexing). Das gilt für die Auf- und Abwärtsverbindung unabhängig voneinander. Dabei ist es von entscheidender Bedeutung, dass jede Teilnehmerstation alle in Abwärtsrichtung gesendeten Pakete, sogenannte RLC-Blöcke, empfangen und korrekt dekodieren muss, da sie über keine Information verfügt, wann ein für diese Teilnehmerstation bestimmter Block übertragen wird. Zur eindeutigen Adressierung der Datenpakete für die Teilnehmerstation in Abwärtsrichtung dient ein im Funkverbindungssteuerungs/Mediumszugriffs-RLC/MAC-Block-Kopfabschnitt (RLC/MAC: Radio Link Control / Medium Access Control Header) enthaltener Identifikator TFI (Temporary Flow Identifier), der bei der Verkehrskanalzuweisung dem Paketdatenfluß TBF (Temporary Block Flow) für die Datenübertragung in Abwärtsrichtung der Teilnehmerstation zugeordnet wird. Zur kollisionsfreien Nutzung des Paketdaten-Verkehrskanals bei dynamischer Kanalvergabe in der Aufwärtsverbindung wird der Zustand der Aufwärtsverbindung mit Hilfe eines Aufwärtsverbindungs-Kennzeichnungsmerkers USF (Uplink State Flag) benutzt, der bei der Verkehrskanalzuweisung dem Paketdatenfluß (TBF) für die Datenübertragung in Aufwärtsrichtung der Teilnehmerstation zugeordnet wird. Daher sollen alle auf dem Paketdaten-Verkehrskanal in Aufwärtsrichtung gemultiplexten Teilnehmerstationen den im Funkverbindungssteuerungs/Mediumszugriffs-(RLC/MAC)-Block-Kopfabschnitt enthaltenen Aufwärtsverbindungs-Zustandsmerker eines jeden in Abwärtsrichtung auf dem gleichen Zeitschlitz versendeten Funkverbindungs-Steuerungs-(RLC)-Blocks empfangen und korrekt dekodieren können.

Die Paketdaten-Verkehrskanäle, die sich beispielsweise bei GSM/GPRS/EGPRS auf dem Nachrichten- bzw. Informationsträger (BCCH) befinden, werden dabei mit konstanter Leistung abgestrahlt. Bei der Übertragung auf den Paketdaten-Verkehrskanälen auf anderen Trägern wird im allgemeinen in der Abwärtsrichtung ebenfalls keine Leistungsregelung (Downlink Power Control) verwendet, da jeder Paketdaten-Verkehrskanal von mehreren Teilnehmern gleichzeitig genutzt werden kann (Multiplexing) und bei einer Abwärtsverbindung die Sendeleistung auf dem Paketdaten-Verkehrskanal auf die Teilnehmerstation mit dem größten Pfadverlust (Pathloss), d.h. im allgemeinen auf die am weitesten entfernte Station, eingestellt wird. Dies wird so durchgeführt, da beim Multiplexing jede Teilnehmerstation alle in Abwärtsrichtung gesendeten Pakete empfangen und korrekt dekodieren können muss, da sie über keine Information verfügt, wann ein für diese Teilnehmerstation bestimmtes Paket übertragen wird. Ferner soll jede Teilnehmerstation die im Funkverbindungssteuerungs/Mediumszugriffs-(RLC/MAC)-Kopfabschnitt eines jeden in Abwärtsrichtung versendeten Blocks beinhaltete Aufwärtsverbindungs-Zustandsmerker-(USF)-Information lesen, damit die Aufteilung der Ressource in der Aufwärtsverbindung unter mehreren Teilnehmerstationen (Multiplexing) ohne Kollisionen funktionieren kann.

Die Wahrscheinlichkeit, dass bei einem Multiplexen beliebiger Teilnehmer-Stationen in einer Zelle auf einem Paketdaten-Verkehrskanal immer ein "weit entfernter" Teilnehmer mit großem Pfadverlust dabei ist, ist sehr groß. Denn bei Annahme einer statistischen Gleichverteilung der Teilnehmer-Stationen in der Zelle mit der angenäherten Fläche eines Kreises bzw. eines Hexagons befinden sich 75% der Teilnehmer außerhalb der Hälfte des Zellenradius und nur 25% innerhalb des halben Zellradius. Daher ist eine geeignete Zuweisungsstrategie der Teilnehmer zu den Paketdaten-Verkehrskanälen durch das Basisstations-Untersystem (BSS: Basis Station Subsystem) unerläßlich.

Bisher wird die Sendeleistung für die Abwärtsverbindung, d.h. die Sendeleistung der Basisstation, auf einem Paketdaten-Verkehrskanal für alle Teilnehmerstationen, die sowohl auf diesem Paketdaten-Verkehrskanal für die Abwärtsverbindung als auch auf dem entsprechenden, auf dem gleichen Zeitschlitz befindlichen Paketdaten-Verkehrskanal für die Aufwärtsverbindung gleichzeitig versorgt werden (Multiplexing), einheitlich so eingestellt, dass selbst die Teilnehmerstation mit der schwächsten Empfangsleistung noch alles korrekt empfangen kann. Das bedeutet jedoch im Allgemeinen, dass keine oder nur eine sehr eingeschränkte Leistungsregelung möglich ist.

WO 99 579 25 A offenbart ein Verfahren zur dynamischen Zweisung von Paketdaten-Verkehrskanälen wobei konkurrierende Teilnehmer in klassen entsprechend ihren benötigten Sendeleistung eingeteilt werden. Die Aufgabe der Erfindung besteht darin, ein geeignetes Verfahren zur Leistungsregelung in Abwärtsverbindungen bei einem Funk-Kommunikationssystem bzw. ein entsprechendes Kommunikationssystem vorzuschlagen.

Diese Aufgabe wird durch das Verfahren mit den Merkmalen des Patentanspruchs 1 bzw. das Kommunikationssystem gemäß den Merkmalen des Patentanspruchs 12 gelöst.

Vorteilhafte Ausgestaltungen sind Gegenstand von abhängigen Ansprüchen.

Dass den Paketdaten-Verkehrskanälen für Nutz-Datenübertragungen jeweils verschiedene Sendeleistungen in Abwärtsrichtung von der Basisstation zu der/den Teilnehmer-Station(en) zuweisbar sind, bietet einen sehr günstigen Ansatz zur Lösung der Leistungsregelung in Abwärtsrichtung bei Paketdatendiensten im GSM-Netz, wie z.B. GPRS oder EGPRS, oder anderen Netzen bzw. ermöglicht überhaupt erst eine echte Leistungsregelung auf Paketdaten-Verkehrskanälen.

Gleichzeitig ermöglicht bzw. beinhaltet das Verfahren eine Kanalzuweisungsstrategie der Teilnehmer-Stationen auf Paketdaten-Verkehrskanälen, um dadurch gleichzeitig die Leistungsfähigkeit zu steigern. So wird vorteilhafterweise jede der Teilnehmer-Stationen mit jeweils eigenem Sendeleistungsbedarf in Abwärtsrichtung einem Paketdaten-Verkehrskanal mit entsprechend zugewiesenem Sendeleistungsbereich zugeordnet. Dabei können jeweils Teilnehmer-Stationen mit zueinander ähnlichem Sendeleistungsbedarf in Abwärtsrichtung einem gemeinsamen Paketdaten-Verkehrskanal mit entsprechend zugewiesenem Sendeleistungsbereich zugewiesen werden.

Den Sendeleistungsbedarf in Abwärtsrichtung der Teilnehmer-Station(en) anhand des Pfadverlustes bei einer Datenübertragung in Aufwärtsrichtung zu bestimmen, insbesondere anhand des Pfadverlustes bei einer Signalisierung in Aufwärtsrichtung über einen Kanal für direkten zufälligen Zugriff der Teilnehmer-Stationen auf die Basisstation zu bestimmen, ist besonders einfach und ohne besondere Vorkehrungen in Form neu einzuführender Einrichtungen umsetzbar. Vorteilhafterweise wird der Sendeleistungsbedarf dabei auch unter Berücksichtigung des erforderlichen Dienstes und/oder des erforderlichen Datendurchsatzes und/oder der erforderlichen Dienstgüte bestimmt.

Die Zuweisung der Teilnehmer-Station(en) wird bei verändertem Sendeleistungsbedarf in Abwärtsrichtung vorteilhafterweise neu durchgeführt, so dass eine Aktualisierung der Zuweisungen an die jeweils momentan gültigen Umgebungsbedingungen etc. möglich ist.

In Summe aller Paketdaten-Verkehrskanäle wird die Gesamtsendeleistung der Basis- bzw. Basis-Sende/Empfangs-Station verringert, was zur Reduktion der Interferenz im Funknetz und damit zu Kapazitätserhöhung führt.

Ein weiterer besonders vorteilhafter Verfahrensschritt ist die Auswertung der Zugriffs-Burst-Empfangsleitung durch die Basisstation zur ersten Zuweisung des Modulations- und Kodierungs-Schemas an die Teilnehmer-Station. Den Teilnehmer-Station(en) kann entsprechend abhängig vom Sendeleistungsbedarf in Abwärtsrichtung auch das Modulations- und/oder Kodierungs-Schema zugewiesen werden. Da unterschiedliche Modulations- und/oder Kodierungs-Schemata jeweils einen bestimmten Signal-Stör-Abstand erfordern, hängt nämlich das geeignetste Modulations- und/oder Kodierungs-Schema ebenfalls vom Pfadverlust Basisstation-Teilnehmerstation sowie den Interferenz-Bedingungen in der Zelle ab.

Ferner bewirkt die Zuweisungsstrategie der Teilnehmer-Stationen mit gleichen bzw. ähnlichen Modulations- und Kodierungs-Schemata auf gleiche Paketdaten-Verkehrskanäle eine Entlastung der Schnittstelle (bei GSM die sogenannte Abis-Schnittstelle) zwischen Basisstations-Steuereinrichtung und Basis-Sende/Empfangs-Stationen. Das Verfahren berücksichtigt dabei die gesamte zur Verfügung stehende Abis-Kapazität einer Basisstation sowie die jeweils einem Paketdatenkanal zugewiesene Abis-Kapazität.

Unter Teilnehmer-Stationen sind dabei alle denkbaren Stationen zu verstehen, insbesondere mobile und stationäre Funkstationen und Datenendstationen zum Anschluß einer Computereinheit.

Ein Ausführungsbeispiel wird nachfolgend anhand der Zeichnung näher erläutert. Es zeigen:
- Fig. 1: ein Blockschaltbild eines bekannten Mobilfunksystems,
- Fig. 2: eine schematische Darstellung der Rahmenstruktur eines GSM/GPRS-Paket-Daten-Kanals und
- Fig. 3: einen Ablaufplan eines Verfahrens zur Leistungsregelung.

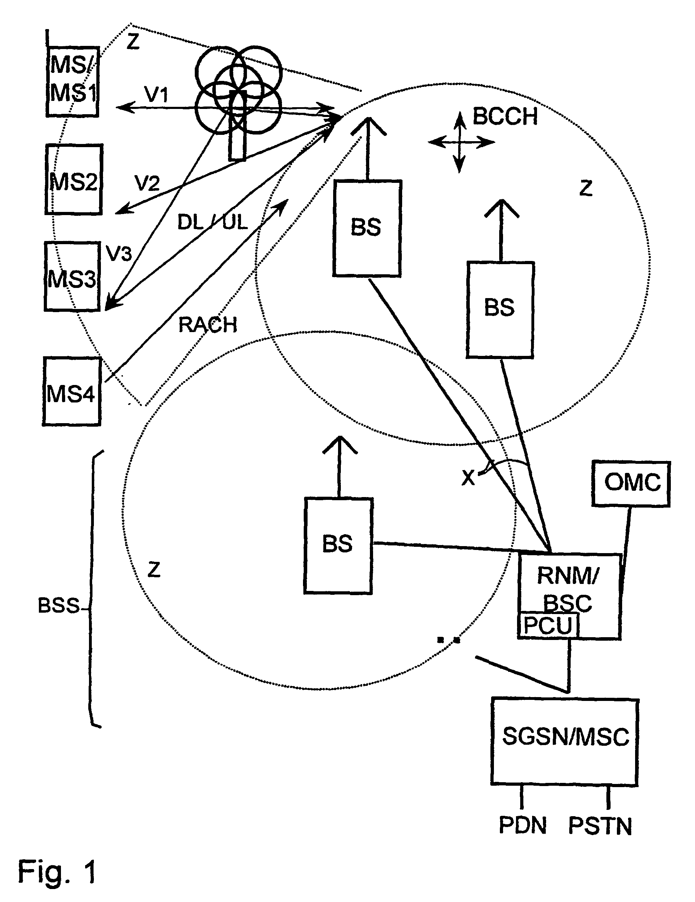

Das in Fig. 1 dargestellte Mobilfunksystem als Beispiel eines Funk-Kommunikationssystems besteht aus einer Vielzahl von Mobilvermittlungsstellen MSC sowie Dienste- und Zugangsnetzknoten SGSN (Serving GPRS Support Node), die untereinander vernetzt sind bzw. den Zugang zu einem Festnetz PSTN oder einem Paketdatennetz PDN herstellen. Weiterhin sind diese Mobilvermittlungsstellen MSC mit jeweils zumindest einer Einrichtung RNM/BSC zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu Teilnehmer-Stationen, z.B. mobilen Stationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt. Die Basisstationen und die diese steuernden Einrichtungen bilden ein Basisstationssystem (BSS/Base Station System).

In Fig. 1 sind beispielhaft bestehende Verbindungen V1, V2, V3 zur Übertragung von Nutzinformationen und Signalisierungsinformationen zwischen mobilen Teilnehmer-Stationen MS und einer Basisstation BS und eine Anforderung zur Ressourcenzuteilung oder eine kurze Bestätigungsmeldung in einem Zugriffskanal (P)RACH ((Packet) Random Access CHannel) durch eine weitere mobile Station MS dargestellt. Weiterhin ist ein Organisationskanal (BCCH: Broadcast Control CHannel) dargestellt, der zur Übertragung von Nutz- und Signalisierungsinformationen mit einer definierten Sendeleistung von jeder der Basisstationen BS für alle mobilen Stationen MS bereitgestellt wird.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, insbesondere für Teilnehmerzugangsnetze mit drahtlosem Teilnehmeranschluß.

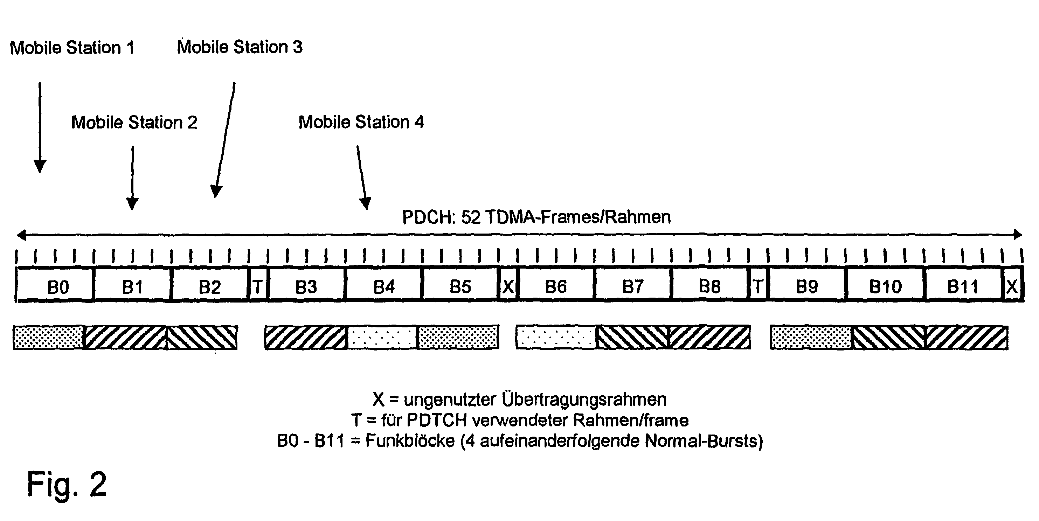

Eine beispielhafte Rahmenstruktur für die Funkübertragung von Paketdaten auf einem Paketdatenkanal PDCH bei GPRS/EGPRS-Systemen ist aus Fig. 2 ersichtlich.

Der GSM-Träger mit 200kHz Bandbreite wird in acht Zeitschlitze zerlegt. Ein Paketdatenkanal PDCH belegt genau einen Zeitschlitz, der nochmals in 12 Funk-Blöcke B0,..,B11 mit jeweils vier Bursts zerlegt wird. Mehrere Teilnehmer-Stationen MS werden auf dem Paketdatenkanal PDCH gemultiplext, indem ihnen jeweils durch Paketverteilungs-Einheiten (Scheduler) im Basisstations-Subsystem BSS die entsprechenden Funk-Blöcke B0,..,B11 nacheinander zugewiesen werden.

Zur Übertragung von Services mit hohen Datenraten werden in der Regel mehrere physikalische Ressourcen zu einem logischen Kanal verknüpft. Bei Mehr-Zeitschlitz-fähigen-Teilnehmer-Stationen (Multislot Mobiles) können dabei gemäß den GSM/GPRS/EGPRS-Standards einer Teilnehmer-Station mehrere Paketdatenkanäle PDCHs (bzw. Zeitschlitze) parallel freigeschaltet werden. Zum Beispiel werden beim GSM-Paketdatendienst GPRS/EGPRS für einen Service bzw. Dienst mit 144 kBit/s in Aufwärtsrichtung und Abwärtsrichtung jeweils bis zu acht physikalische Ressourcen (PDCHs/GSM-Zeitschlitze) pro Teilnehmer-Station MS parallel benötigt.

Die Daten auf einem Funkblock B0,...,B11 werden je nach zugewiesener Teilnehmer-Station MS und deren Pfadverlust zur Basisstation BS bzw. deren Antennenanordnung unterschiedlich stark kodiert, d.h. bei schwacher Kodierung werden viele Nutzdatenbit bei großem Signal-Stör-Abstand am Empfänger übertragen und bei starker Kodierung entsprechend weniger Nutzdatenbit bei kleinem Signal-Stör-Abstand übertragen. Mit anderen Worten, den einzelnen Verbindungen auf ein und demselben Paketdatenkanal PDCH wird jeweils ein eigenes Modulations- und Kodierungs-Schema zugewiesen, das vom Signal-Stör-Abstand (Empfangspegel sowie Interferenzpegel) und natürlich auch der geforderten Dienstgüte QoS (Quality of Service) abhängt.

Da je nach Modulations- und Kodierschema eine unterschiedlich große Anzahl von Nutzdatenbit pro Funkblock B0,..,B11 auf dem gleichen Paketdatenkanal PDCH übertragen wird, variiert dem-entsprechend auch die Bandbreite auf der Abis-Schnittstelle X zwischen Basisstation BS und Basistations-Steuereinrichtung BSC von Funkblock B0,..,B11 zu Funkblock. Zweckmäßig ist daher die Zuweisung von Verbindungen mit gleichem Modulations- und Kodierschema auf den gleichen Paketdatenkanal PDCH, da damit in Summe die Gesamtkapazität der Abis-Schnittstelle X über alle Verbindungen hinweg minimiert wird. Gleichzeitig darf die Summe der Abis-Kapazitäten aller einzelnen Paketdatenkanäle PDCHs nicht die zur Verfügung stehende gesamte Abis-Kapazität überschreiten.

Gleichzeitig erlaubt die Zuweisung gleicher Modulations- und Kodierschema zu Teilnehmern mit ähnlichem Pfadverlust und deren Zuweisung zum selben Paketdatenkanal PDCH die Einstellung der gleichen Sendeleistung auf diesem Paketdatenkanal PDCH, da damit alle Teilnehmer einen ähnlichen Signal-Stör-Abstand am Empfänger erreichen werden.

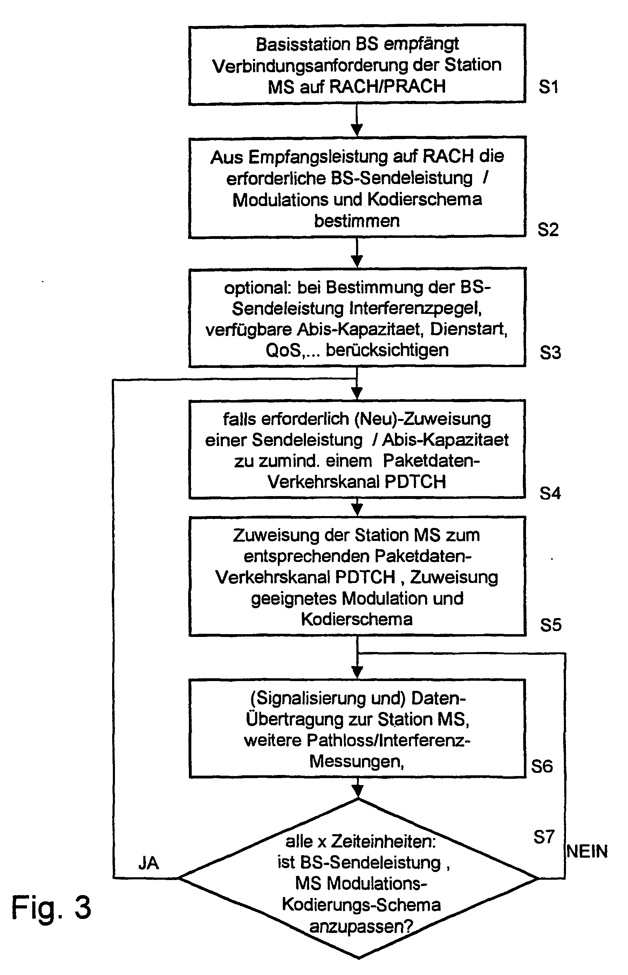

Wie auch aus Fig. 3 ersichtlich, werden Teilnehmer-Stationen MS mit ähnlichem Pfadverlust bzw. Pathloss dem gleichen Paketdaten-Verkehrskanal PDTCH zugewiesen (Schritt S5).

Die Zuweisung erfolgt dabei automatisch durch das Basisstationssystem. Nachdem die Basisstation BS eine Zugriffsanforderung von einer Teilnehmer-Station MS empfängt (Schritt S1), bestimmt die Basisstation BS aufgrund der zuvor gemessenen Empfangsfeldstärke des Zugriffs- bzw. Access-Bursts auf dem Kanal für zufällige Zugriffe PRACH/RACH (Uplink Random Access CHannel) und Interferenzmessungen die erforderliche Sendeleistung für die Übertragung in Abwärtsrichtung DL (Schritt S2). Da alle Teilnehmer-Stationen MS einer Zelle Z für den Zugriff die in der Zelle Z maximal erlaubte Sendeleistung verwenden, welche über die System-Informations-Nachrichten (Messages) über den Nachrichtenkanal BCCH übermittelt werden, kann der Pfadverlust von der mobilen Teilnehmer-Station MS zur Basisstation BS durch die Basisstation BS eindeutig bestimmt werden.

Vorteilhafterweise können bei der Kanalzuweisung durch die Basisstation BS zusätzlich der von der Teilnehmer-Station MS angeforderte Datendurchsatz bzw. die geforderte Dienstequalität (Quality of Service ⇒ mittlerer + Spitzen-Durchsatz) sowie deren Funk-Priorität berücksichtigt werden (Schritt S3).

Nun können die Basisstation BS bzw. die Basisstations-Steuereinrichtung BSC eine Zuweisung von Sendeleistungen (bzw. indirekt aus Sicht der Teilnehmer-Stationen MS Sendeleistungsbereichen) zu einem oder mehreren der Paketdaten-Verkehrskanäle PDTCH durchführen (Schritt S4). Diese Zuweisungen sind vorteilhafterweise aktualisierbar, z.B. wenn sich die Netzauslastung, die Güte der Funk-Verbindung oder die Entfernung einer Vielzahl von Teilnehmer-Stationen MS mit der Zeit ändert.

Nun kann die Teilnehmer-Station MS einem Paketdaten-Verkehrskanal PDTCH mit entsprechender Sendeleistung zugeordnet werden (Schritt S5). Nach der entsprechenden Signalisierung an die Teilnehmer-Station MS können über den dieser zugewiesenen Paketdaten-Verkehrskanal PDTCH Daten mit genau der Sendeleistung übertragen werden, die für eine sichere Übertragung erforderlich ist (Schritt S6).

Die Pfadverlust-Information kann darüber hinaus vom Netzwerk außerdem dazu verwendet werden, der Teilnehmer-Station MS zu Beginn des Paketdatenflusses ein geeignetes, initiales Modulations- und Kodierungs-Schema zuzuweisen. Das Modulations- und Kodierungs-Schema kann sich danach während der Datenübertragung noch durch Verbindungs-Anpassungsverfahren (Link Adaptation) den Kanalverhältnissen entsprechend ändern. Dann ist eventuell eine Neuzuweisung der Teilnehmerstation MS zu einem anderen Paketdatenkanal PDCH nötig ("Intrazell-Handover").

In dem Fall, dass Verbindungs-Anpassungsverfahren erforderlich werden, z.B. aufgrund erhöhtem Pfadverlust wegen des Entfernens der Teilnehmer-Station MS von der Basisstation BS, kann die Basisstation BS durch einen von einer geeignet ausgestatteten Netzeinrichtung gesteuerten Prozess die Teilnehmer-Station MS einem anderen, nach obigen Kriterien geeigneteren Paketdaten-Verkehrskanal PDTCH zuweisen (Schritt S7).

Bei Paketdatendiensten im GSM-Netz, z.B. GPRS, übernimmt die Steuerung der Luftschnittstelle eine Paketdatensteuereinrichtung PCU (Packet Control Unit) in der Basissteuereinrichtung BSC.

In der Paketdatensteuereinrichtung PCU wird ein entsprechender Algorithmus implementiert, der die Empfangsleistung des von der Teilnehmer-Station MS kommenden Zugriffs-Bursts verarbeitet. Die Zuweisung des Paketdaten-Verkehrskanals PDTCH und des Modulations- und Kodierungs-Schemas erfolgt dann beim Aufbau der Paketdaten-Verbindung mittels der ansonsten üblichen Paketdatendienst-Zuweisungs-Nachricht für Abwärts/Aufwärtsverbindungen (PACKET UPLINK/DOWNLINK ASSIGNMENT MESSAGE).

Das Verfahren funktioniert sowohl für die Abwärts- als auch für die Aufwärtsverbindung. Für die Aufwärtsverbindung wird die Sendeleistungs-Einstellung in der Basisstation BS berechnet und der Teilnehmer-Station MS mitgeteilt, die Zuweisungsstrategie zu den Paketdatenkanälen PDCHs und die Zuweisung der Modulations- und Kodierschemata erfolgt auf die gleiche Art und Weise.

Aufgrund des über die Verbindungsdauer hinweg zumeist gleichen Pfadverlustes werden die Teilnehmer-Stationen MS eines Paketdaten-Verkehrskanals PDTCH im allgemeinen bzw. mit sehr großer Wahrscheinlichkeit während der gesamten Datenübertragung das selbe Modulations- und Kodierungs-Schema verwenden. Dies wirkt sich vorteilhaft auf die (Abis-)Schnittstelle X zwischen der betroffenen Basisstation BS und der Basisstations-Steuereinrichtung BSC aus. Dort muss nämlich für die Paketdatensteuereinrichtung PCU in der Basisstations-Steuereinrichtung BSC Rahmen bzw. Übertragungsblöcke von Paketdaten-Verkehrskanälen PDTCH mit höheren Kodierungs-Schemata von Paketdatendiensten wie GPRS/EGPRS mehr Bandbreite reserviert werden, als für Sprachkanäle nach dem GSM-Standard, die sich die erforderliche Datenrate anfordern (GSM Full Rate Voice Channel / 16kbps TRAU Frame). Demnach wird auf der Abis-Schnittstelle X zwischen Basisstation BS und Basisstations-Steuereinrichtung BSC Kapazität gespart, da beim Multiplexen der Daten von Teilnehmer-Stationen MS mit ähnlichem Datendurchsatz / gleichem Modulations- und Kodierungs-Schema insbesondere für die Abis-Schnittstelle X eine sehr gute Auslastung ermöglicht wird. Denn eine dynamische Umschaltung der Abis-Kapazität pro Funkblock B0,..,B11 eines Paketdaten-Verkehrskanals PDTCH, z.B. von einer ersten Übertragungsfunktion mit 64kbps der Teilnehmer-Station MS1 auf eine zweite Übertragungsfunktion mit 32kbps der Teilnehmer-Station MS2, dann zu der ersten Übertragungsfunktion mit 64kbps der Teilnehmer-Station MS3 und über die zweite Übertragungsfunktion mit 32kbps der Teilnehmer-Station MS4 wiederum zurück auf die erste Übertragungsfunktion mit 64kbps für die Teilnehmer-Station MS1, ist aus Zeitgründen und aufgrund von Umschaltverlusten (verlorene Datenblöcke) nicht möglich. Die Abis-Schnittstelle X zwischen Basisstation BS und Basisstations-Steuereinrichtung BSC ist bei der Übertragung der Daten der Teilnehmer-Stationen MS2 und MS4 nur zur Hälfte ausgelastet. Vorteilhafter ist, die Teilnehmer-Stationen MS1 und MS3 mit jeweils 64kbps Datenpaket-Steuereinrichtungs-Rahmen (PCU frames) sowie Teilnehmer-Stationen MS2 und MS4 mit 32kbps Datenpaket-Steuereinrichtungs-Rahmen auf getrennte Paketdaten-Verkehrskanäle PDTCH zu legen.

## Patentansprüche

1. Verfahren zur Sende-Leistungsregelung bei einer Nutz-Datenübertragung von Paketdaten über eine Funk-Schnittstelle zwischen einer Basisstation (BS) und einer oder mehreren Teilnehmer-Stationen (MS), insbesondere Datenendeinrichtungen,
- wobei die Nutz-Datenübertragung über einen Träger erfolgt, der in eine Vielzahl von parallel übertragenden Paketdaten-Verkehrskanälen (PDTCH) untergliedert ist,
**dadurch gekennzeichnet,**
**dass** den Paketdaten-Verkehrskanälen (PDTCH) für Nutz-Datenübertragungen jeweils verschiedene Sendeleistungen in Abwärtsrichtung (DL) von der Basisstation (BS) zu der/den Teilnehmer-Stationen (MS) und/oder in Aufwärtsrichtung (UL) von der Teilnehmer-Station (MS) zu der Basisstation (BS) zuweisbar sind (Schritt S4).

2. Verfahren nach Anspruch 1, bei dem
jede der Teilnehmer-Stationen (MS) mit jeweils eigenem Sendeleistungsbedarf in Abwärtsrichtung (DL) einem Paketdaten-Verkehrskanal (PDTCH) mit entsprechend zugewiesenem Sendeleistungsbereich zugewiesen wird (Schritt S5).

3. Verfahren nach Anspruch 1 oder 2, bei dem
jeweils Teilnehmer-Stationen (MS) mit ähnlichem Sendeleistungsbedarf in Abwärtsrichtung (DL) einem gemeinsamen Paketdaten-Verkehrskanal (PDTCH) mit entsprechend zugewiesenem Sendeleistungsbereich zugewiesen werden (Schritt S5).

4. Verfahren nach einem der Ansprüche 2 oder 3, bei dem
der Sendeleistungsbedarf in Abwärtsrichtung (DL) der Teilnehmer-Stationen (MS) anhand des Pfadverlustes bei einer Datenübertragung oder Signalisierung in Aufwärtsrichtung (UL) bestimmt wird (Schritt S2, Schritt S6).

5. Verfahren nach einem der Ansprüche 2 oder 3, bei dem
der Sendeleistungsbedarf in Aufwärtsrichtung (UL) der Teilnehmer-Stationen (MS) anhand des Pfadverlustes bei einer Signalisierung in Aufwärtsrichtung über einen Kanal (RACH/PRACH) für direkten zufälligen Zugriff der Teilnehmer-Station(en) (MS) auf die Basisstation (BS) bestimmt wird (Schritt S2, Schritt S6).

6. Verfahren nach einem der Ansprüche 2 bis 5, bei dem
der Sendeleistungsbedarf unter Berücksichtigung des erforderlichen Dienstes und/oder des erforderlichen Datendurchsatzes und/oder der erforderlichen Dienstgüte (QoS) und/oder der in der Zelle vorherrschenden Interferenzsituation bestimmt wird (Schritt S3).

7. Verfahren nach einem der Ansprüche 2 bis 6, bei dem
der/den Teilnehmer-Station(en) (MS) abhängig vom Sendeleistungsbedarf in Abwärtsrichtung (DL) ein Modulations- und/oder Kodierungs-Schema zugewiesen wird.

8. Verfahren nach Anspruch 7, bei dem
eine Neuzuordnung des Modulations- und Kodierung-Schemas zu einer Verbindung von der Sendeleistung auf benachbarten Paketdaten-Verkehrskanälen (PDCH) derselben Basisstation (BS) abhängig ist.

9. Verfahren nach einem der Ansprüche 2 bis 8, bei dem
die Zuweisung hinsichtlich der Teilnehmer-Stationen (MS) bei verändertem Sendeleistungsbedarf in Abwärtsrichtung (DL) neu durchgeführt wird (Schritt S7, S4, S5).

10. Verfahren nach einem der Ansprüche 2 bis 9, bei dem
eine Kapazitätsauslastung auf der Schnittstelle (X) zwischen Basisstation (BS) und Basisstations-Steuereinrichtung (BSC) bei der Zuweisung der Sendeleistung zu zumindest einem der Paketdaten-Verkehrskanäle (PDCH), bei der Zuweisung der Teilnehmer-Stationen (MS) zu den Paketdaten-Verkehrskanälen (PDCH) und/oder bei der Zuweisung von Modulations- und Kodierungsschemata zu den Paketdaten-Verbindungen berücksichtigt wird.

11. Verfahren nach einem vorstehenden Anspruch, bei dem
die Zuweisung des Paketdaten-Verkehrskanals (PDTCH) oder eines Modulations- und Kodierungs-Schemas für die Teilnehmer-Stationen (MS) mittels Paketdatendienst-Zuweisungs-Nachrichten für Abwärts- bzw. Aufwärtsverbindungen erfolgt.

12. Funk-Kommunikationssystem, insbesondere zum Durchführen eines Verfahrens zur Sende-Leistungsregelung nach einem vorstehenden Anspruch, mit
- zumindest einer Basisstation (BS);
- einer oder mehreren Teilnehmer-Stationen (MS), insbesondere Datenendeinrichtungen,
- einer Funk-Schnittstelle mit zumindest einem Träger zum Übertragen von Nutz-Daten in Abwärtsrichtung von der Basisstation (BS) zu der/den Teilnehmer-Stationen (MS),
- wobei der Träger in eine Vielzahl von parallel übertragenden Paketdaten-Verkehrskanälen (PDTCH) untergliedert ist,
**dadurch gekennzeichnet,**
**dass** die Basisstation (BS) für Nutz-Datenübertragungen in Abwärtsrichtung (DL) eine Sendeleistungs-Steuereinrichtung (PCU) zum Senden mit verschiedenen Sendeleistungen auf den Paketdaten-Verkehrskanälen (PDTCH) aufweist.

## Claims

1. Method for transmitter power regulation for user data transmission of packet data via a radio interface between a base station (BS) and one or more subscriber stations (MS), particularly data terminal equipment,
- where the user data transmission is made using a carrier which is divided into a large number of packet data traffic channels (PDTCH) transmitting in parallel,
**characterized**
**in that** the packet data traffic channels (PDTCH) for user data transmissions can each be allocated (step S4) different transmitter powers in the downlink (DL) from the base station (BS) to the subscriber station(s) (MS) and/or in the uplink (UL) from the subscriber station (MS) to the base station (BS).

2. Method according to Claim 1 in which
each of the subscriber stations (MS) with its own respective transmitter power requirement in the downlink (DL) is allocated (step S5) to a packet data traffic channel (PDTCH) with an appropriately allocated transmitter power range.

3. Method according to Claim 1 or 2, in which
subscriber stations (MS) with a similar transmitter power requirement in the downlink (DL) are respectively allocated (step S5) to a common packet data traffic channel (PDTCH) with an appropriately allocated transmitter power range.

4. Method according to one of Claims 2 or 3, in which
the transmitter power requirement in the downlink (DL) for the subscriber stations (MS) is determined (step S2, step S6) on the basis of the path loss during data transmission or signalling in the uplink (UL).

5. Method according to one of Claims 2 and 3, in which
the transmitter power requirement in the uplink (UL) for the subscriber stations (MS) is determined (step S2, step S6) on the basis of the path loss during signalling in the uplink via a channel (RACH/PRACH) for direct random access to the base station (BS) by the subscriber station(s) (MS).

6. Method according to one of Claims 2 to 5, in which
the transmitter power requirement is determined (step S3) by taking into account the service required and/or the data throughput required and/or the quality of service (QoS) required and/or the interference situation prevailing in the cell.

7. Method according to one of Claims 2 to 6, in which
a modulation and/or coding scheme is allocated to the subscriber station(s) (MS) on the basis of the transmitter power requirement in the downlink (DL).

8. Method according to Claim 7, in which
reallocation of the modulation and coding scheme to a connection is dependent on the transmitter power on neighbouring packet data traffic channels (PDCH) for the same base station (BS).

9. Method according to one of Claims 2 to 8, in which
the subscriber stations (MS) are reallocated (step S7, S4, S5) when there is a change in the transmitter power requirement in the downlink (DL).

10. Method according to one of Claims 2 to 9, in which
capacity utilization on the interface (X) between base station (BS) and base station controller (BSC) is taken into account when allocating the transmitter power to at least one of the packet data traffic channels (PDCH), when allocating the subscriber stations (MS) to the packet data traffic channels (PDCH) and/or when allocating modulation and coding schemes to the packet data links.

11. Method according to one of the preceding claims, in which
the packet data traffic channel (PDTCH) or a modulation and coding scheme for the subscriber stations (MS) is allocated using packet data service allocation messages for downlinks and uplinks.

12. Radio communication system, particularly for carrying out a method for transmitter power regulation according to one of the preceding claims, having
- at least one base station (BS);
- one or more subscriber stations (MS), particularly data terminal equipment,
- a radio interface having at least one carrier for transmitting user data in the downlink from the base station (BS) to the subscriber station(s) (MS),
- where the carrier is divided into a large number of packet data traffic channels (PDTCH) transmitting in parallel,
**characterized**
**in that** the base station (BS) has, for user data transmissions in the downlink (DL), a transmitter power controller (PCU) for transmitting at different transmitter powers on the packet data traffic channels (PDTCH).

## Revendications

1. Procédé de régulation de puissance d'émission lors d'une transmission de données utiles de données en paquet au moyen d'une interface radio entre une station de base (BS) et une ou plusieurs stations d'abonnés (MS), en particulier des terminaux de données,
- la transmission de données utiles s'effectuant au moyen d'un support qui est subdivisé en une pluralité de canaux de trafic de données en paquet (PDTCH) transmettant en parallèle,
**caractérisé en ce**
**que** différentes puissances d'émission peuvent être attribuées respectivement aux canaux de trafic de données en paquet (PDTCH) pour des transmissions de données utiles dans le sens aval (DL) de la station de base (BS) à la station/aux stations d'abonné(s) (MS) et/ou dans le sens amont (UL) de la station d'abonné (MS) à la station de base (BS) (étape S4).

2. Procédé selon la revendication 1, dans lequel
chacune des stations d'abonnés (MS) est attribuée avec respectivement un besoin propre de puissance d'émission dans le sens aval (DL) à un canal de trafic de données en paquet (PDTCH) avec une plage de puissance d'émission attribuée de façon appropriée (étape S5).

3. Procédé selon la revendication 1 ou 2, dans lequel
respectivement des stations d'abonnés (MS) sont attribuées avec un besoin semblable de puissance d'émission dans le sens aval (DL) à un canal de trafic de données en paquet commun (PDTCH) avec une plage de puissance d'émission attribuée de façon appropriée (étape S1).

4. Procédé selon l'une quelconque des revendications 2 ou 3, dans lequel
le besoin de puissance d'émission dans le sens aval (DL) des stations d'abonnés (MS) est déterminé à l'aide de la perte sur le trajet lors d'une transmission de données ou d'une signalisation dans le sens amont (UL) (étape S2, étape S6).

5. Procédé selon l'une quelconque des revendications 2 ou 3, dans lequel
le besoin de puissance d'émission dans le sens amont (UL) des stations d'abonnés (MS) est déterminé à l'aide de la perte sur le trajet lors d'une signalisation dans le sens amont au moyen d'un canal (RACH/PRACH) pour un accès aléatoire direct de la station (des stations) d'abonné(s) (MS) à la station de base (BS) (étape S2, étape S6).

6. Procédé selon l'une quelconque des revendications 2 à 5, dans lequel
le besoin de puissance d'émission est déterminé en tenant compte du service nécessaire et/ou du débit de données nécessaire et/ou de la qualité de service (QoS) nécessaire et/ou de la situation d'interférence prédominante dans la cellule (étape S3).

7. Procédé selon l'une quelconque des revendications 2 à 6, dans lequel
un schéma de modulation et/ou de codage est attribué à la/aux station(s) d'abonné(s) (MS) en fonction du besoin de puissance d'émission dans le sens aval (DL).

8. Procédé selon la revendication 7, dans lequel
une nouvelle attribution du schéma de modulation et de codage pour une connexion est dépendante de la puissance d'émission sur des canaux de trafic de données en paquet (PDCH) voisins de la même station de base.

9. Procédé selon l'une quelconque des revendications 2 à 8, dans lequel
l'attribution concernant les stations d'abonnés (MS) est effectuée de nouveau dans le cas d'un besoin modifié de puissance d'émission dans le sens aval (DL) (étapes S7, S4, S5).

10. Procédé selon l'une quelconque des revendications 2 à 9, dans lequel
on prend en compte une utilisation de capacité sur l'interface (X) entre la station de base (BS) et l'appareil de commande de la station de base (BSC) lors de l'attribution de la puissance d'émission à au moins un des canaux de trafic de données en paquet (PDCH), lors de l'attribution des stations d'abonnés (MS) aux canaux de trafic de données en paquet (PDCH) et/ou lors de l'attribution de schémas de modulation et de codage aux connexions de données en paquet.

11. Procédé selon une revendication précédente, dans lequel
l'attribution du canal de trafic de données en paquet (PDTCH) ou d'un schéma de modulation et de codage pour les stations d'abonnés (MS) s'effectue au moyen de messages d'attribution de service de données en paquet pour des connexions aval resp. amont.

12. Système de communication radio, en particulier pour la mise en oeuvre d'un procédé pour le réglage de puissance d'émission selon une revendication précédente, comprenant
- au moins une station de base (BS) ;
- une ou plusieurs stations d'abonnés (MS), en particulier des terminaux de données,
- une interface radio avec au moins un support pour la transmission de données utiles dans le sens aval de la station de base (BS) à la/aux station(s) d'abonné(s) (MS),
- le support étant subdivisé en une pluralité de canaux de trafic de données en paquet (PDTCH) transmettant en parallèle,
**caractérisé en ce**
**que** la station de base (BS) pour des transmissions de données utiles dans le sens aval (DL) présente un appareil de commande de puissance d'émission (PCU) pour l'émission avec différentes puissances d'émission sur les canaux de trafic de données en paquet (PDTCH).
